Europäisches Patentamt

European Patent Office

Office européen des brevets

(19)

(11) Veröffentlichungsnummer : **0 058 812**
**B1**

(12) # EUROPÄISCHE PATENTSCHRIFT

(45) Veröffentlichungstag der Patentschrift :
28.08.85

(21) Anmeldenummer : 81810519.9

(22) Anmeldetag : 28.12.81

(51) Int. Cl.⁴ : **B 01 D 39/20, C 04 B 38/06,
C 04 B 35/10, C 22 B 9/02**

(54) **Poröser Keramikfilter und Verfahren zu dessen Herstellung.**

(30) Priorität : 22.01.81 US 227134

(43) Veröffentlichungstag der Anmeldung :
01.09.82 Patentblatt 82/35

(45) Bekanntmachung des Hinweises auf die Patenterteilung : 28.08.85 Patentblatt 85/35

(84) Benannte Vertragsstaaten :
AT BE CH DE FR GB IT LI NL SE

(56) Entgegenhaltungen :
EP-A- 0 029 802
FR-A- 2 168 026
FR-A- 2 250 722
FR-A- 2 439 170
GB-A- 916 784
US-A- 3 574 646
US-A- 3 947 363
US-A- 3 962 081
R.W. GRIMSHAW: "The chemistry and physics of
clays and allied ceramic materials", 4. Auflage, 1971,
Ernest Benn Ltd., London, G.B.
Die Akte enthält technische Angaben, die nach dem
Eingang der Anmeldung eingereicht wurden und die
nicht in dieser Patentschrift enthalten sind.

(73) Patentinhaber : **Schweizerische Aluminium AG**

**CH-8212 Neuhausen am Rheinfall (CH)**

(72) Erfinder : **Brockmeyer, Jerry W.
Route 9 Box 69
Hendersonville North Carolina 28739 (US)**

## Beschreibung

Ueblicherweise enthält geschmolzenes Aluminium feste Einschlüsse, die in einem fertigen Gussstück der Qualität abträglich und deshalb unerwünscht sind. Diese festen Einschlüsse stammen in der Regel aus drei Quellen. Ein Teil der Einschlüsse sind Partikel aus Aluminiumoxid. Das Aluminiumoxid stammt von auf dem schmelzflüssigen Aluminium aufschwimmenden Oxidfilm. Andere Einschlüsse sind Fragmente des Ofenfutters, der Eingusskanäle und von anderen Teilen, die durch das schmelzflüssige Aluminium angegriffen und mit dem fliessenden Metall mitgerissen werden. Andere Partikel sind Einschlüsse von unlöslichen Verunreinigugen, wie Intermetalle, Boride, Karbide oder Ausfällungen von anderen Aluminiumverbindugen, wie Chloriden. Wenn diese Einschlüsse, nachdem das Metall erstarrt ist, im fertigen Gussstück verbleiben, verursachen sie eine verminderte Duktilität oder eine schlechte Bearbeitungscharakteristik. Daher ist es wünschenswert, diese festen Einschlüsse aus dem Strom geschmolzenen Aluminiums zu entfernen, bevor dieses zu einem festen Gegenstand gegossen worden ist, der als solcher Verwendung findet oder durch Verformung, wie Walzen, Schmieden, Extrudieren usw., weiterverarbeitet wird.

Filtrierverfahren, um Festkörper aus Flüssigkeiten zu entfernen, werden ausgeführt, indem man die mit Festkörpern beladene Flüssigkeit durch ein poröses Filtermedium leitet, das die Festkörper zurückhält.

Das Filtrieren von geschmolzenem Metall im allgemeinen und von geschmolzenem Aluminium im speziellen, schafft neue Probleme, da die Flüssigkeit so aggressiv ist, dass es Schwierigkeiten bereitet, ein beständiges Filtermedium zu finden. Im allgemeinen werden zwei Methoden angewendet, um Einschlüsse aus schmelzflüssigem Aluminium und dessen Legierungen vor dem Giessen zu entfernen. Das bekannteste Filtermedium ist das offene Glasfasergewebe, das im Bereich der Transport- oder Giessrinne oder im Bereich des flüssigen Metalls über dem erstarrenden Metallblock beim Kokillengiessen angeordnet ist. Derartige Gewebe vermögen aber nur relativ grosse Einschlüsse aus dem Metall zu entfernen und sind leicht verletzlich, da die Glasfasern bei den Temperaturen von geschmolzenem Aluminium schon stark erweichen. Im weiteren ist es bekannt, geschmolzenes Aluminium durch ein Bett von losen Aluminiumoxidkörpern, beispielsweise von tafelförmigem Aluminiumoxid zu filtrieren. Dieses Verfahren weist die üblichen Nachteile von Bettfiltern auf, indem zu wenig Festkörper zurückgehalten werden. Derartige Filter haben die Tendenz, durch Kanalbildung ineffizient zu arbeiten, die Porengrösse ist schwer einzustellen und zu überprüfen und eine anfänglich richtig eingestellte Porengrösse kann sich während des Gebrauchs des Filters leicht verändern. Zudem muss, wenn der Filter auch nicht im Gebrauch ist, das darin enthaltene Metall flüssig gehalten werden. Ein verbessertes Verfahren, um Einschlüsse zu entfernen ist aus der US-PS 3 947 363 bekannt und besteht darin, schmelzflüssiges Aluminium mittels eines porösen Keramikfilters, der aus einer Vielzahl von miteinander verbundenen Hohlräumen besteht, die mit Netzwerk aus Keramik umgeben sind, zu filtrieren. Die Zusammensetzung derartiger Filtermaterialien sind Aluminiumoxid-Chromoxid-Mischungen aus vorzugsweise 45 bis 55 % $Al_2O_3$, 10 bis 17 % $Cr_2O_3$, 0.5 bis 2 % Bentonit und 12 bis 17 % eines keramischen Binders, wie Aluminiumorthophosphat. Die Anwendung der porösen Keramikfilter gemäss US-PS 3 947 363 führte einerseits zu einem stark verbesserten Filtrierverfahren, andererseits war die Verwendung relativ grosser Chromoxidmengen in der Filterrezeptur nachteilig. Insbesondere nachteilig ist der hohe Preis des Chromoxids, auch gegenüber dem Aluminiumoxid, die beschränkte Verfügbarkeit des Chromoxids und die daraus erwachsenden Lieferschwierigkeiten. Ein weiteres Problem ist die Erkenntnis, dass $Cr^{+6}$ karzinogen wirken kann. Obwohl derartige Filter keine messbaren Mengen an $Cr^{+6}$ enthalten, ist die Verwendung von Chromoxiden einzuschränken.

Es hat sich weiters ergeben, dass sich bei der Herstellung von grossflächigen Filtern in der bevorzugten Dicke von rund 5.5 cm Festigkeitsprobleme ergeben können. Diese Festigkeitsprobleme könnten durch dickere Filter gelöst werden, bei gleichem Filtriereffekt wären solche Filter aber wesentlich teurer. Es war deshalb wünschenswert, einerseits die der keramischen Zusammensetzung eigene Festigkeit zu erhöhen und gleichzeitig das Chromoxid daraus zu eliminieren. Ein weiterer wichtiger Aspekt bestand darüber hinaus darin, einen Filter vorzuschlagen, der eine solche Festigkeit aufweist, dass damit Schmelzen von verschiedenen Metallen filtriert werden können, der sich dabei zu annehmbaren Kosten herstellen lässt und sich durch hervorragende Filtereigenschaften auszeichnet.

Aufgabe vorliegender Erfindung war es also, einen Filter vorzuschlagen, der bei Abwesenheit beschriebener Nachteile, die gewünschten Eigenschaften aufweist.

Erfindungsgemäss wird das mit einem Filter nach Patentanspruch 1 erreicht.

Der erfindungsgemässe poröse Keramikfilter eignet sich besonders zur Filtration schmelzflüssigen Metallen und insbesondere zur Filtration von schmelzflüssigem Aluminium. Mit der hohen Temperaturresistenz, die der Filter aufweist, eignet er sich besonders für die erschwerten Bedingungen, die beim Metallfiltrieren auftreten. Es hat sich im weiteren gezeigt, dass die Zusammensetzung des Keramikfilters keinerlei Kontamination des Metalls durch Filterbestandteile zur Folge hat. Beim Keramikfilter nach vorliegender Erfindung handelt es sich um ein preisgünstiges Material für den einmaligen Gebrauch und anschliessenden Austausch. Das geschmolzene Metall kann mit dem Keramikfilter in Mengen von rund 0.127 m³/m² Filterfläche bis 12.7 m³/m² Filterfläche, vorzugsweise 0.773 m³/m² Filterfläche bis 2.526 m³/m² Filterfläche, jeweils pro Minute filtriert werden. Die erfindungsgemässen Filter können auf an sich bekannte Weise, beispielsweise nach einem Verfahren, wie in der US-PS 3 893 917 beschrieben, hergestellt werden. Gemäss diesem bekannten Verfahren wird ein offenzelliges, flexibles organisches Schaummaterial aus einer Vielzahl von miteinander verbundenen Hohlräumen, die mit einem Netzwerk aus dem Schaummaterial umgeben, sind, mit einer wässrigen Aufschlämmung eines keramischen Materials imprägniert, so dass das Schaummaterial mit der Aufschlämmung bedeckt und die Hohlräume damit gefüllt sind. Die Aufschlämmung aus keramischem Material wird so gewählt, dass sich nach dem Trocknen und Erhitzen die erfindungsgemässe Zusammensetzung der Filter ergibt. Aus dem imprägnierten Schaummaterial wird dann, beispielsweise durch Abquetschen, ungefähr 80 Gew.-% der keramischen wässrigen Aufschlämmung entfernt. Beim Abquetschen wird das Schaummaterial verformt, und man lässt es anschliessend in seine ursprüngliche Form zurückgehen. Die verbleibende Menge an Aufschlämmung verteilt sich gleichmässig durch das Schaummaterial hindurch und bedeckt die innere Oberfläche gleichmässig. Einzelne Poren können, in gleichmässiger Verteilung, verschlossen bleiben und so stärker gewundene Fliesswege erzeugen. Dann wird das mit Aufschlämmung bedeckte Schaummaterial erst getrocknet, anschliessend, um das flexible organische Schaummaterial zu entfernen, erhitzt und schliesslich die verbleibende keramische Beschichtung hitzebehandelt oder gesintert. Dabei entsteht eine feste keramische Schaumstruktur aus einer Vielzahl von miteinander verbundenen Hohlräumen, die mit einem Netzwerk aus chemisch gebundener oder gesinterter Keramik umgeben sind und eine exakte Kopie des ursprünglichen organischen Materials darstellt. Die Hauptkomponente des keramischen Materials, aus dem die erfindungsgemässen Filter hergestellt werden, ist $Al_2O_3$. In vorliegender Erfindung ist das $Al_2O_3$ in zwei Formen enthalten. Hauptsächlich wird kalziniertes $Al_2O_3$ in einer Kornfraktion aus Maschenweiten von 0,15 bis 0,025 mm (100 mesh bis 500 mesh), vorzugsweise von 0,043 mm (325 mesh), in Mengen von 55 bis 70 Gew.-%, vorzugsweise in Mengen von 60 bis 65 Gew.-%, angewendet. $Al_2O_3$ ist besonders geeignet für die Anwendung in Keramikfiltern, da es von schmelzflüssigem Aluminium oder Kupfer, im Gegensatz zu beispielsweise Siliciumdioxid, nicht angegriffen wird. Neben der chemischen Beständigkeit des Aluminiumoxides weist dieses auch die notwendige mechanische und strukturelle Festigkeit auf, um den besonderen Anforderungen zu genügen. Nach der Erfindung ist $Al_2O_3$ auch in Form von micronisiertem reaktivem Aluminiumoxid in Mengen von 2 bis 10 Gew.-%, vorzugsweise 2 bis 5 Gew.-%, enthalten. Die Anwendung des micronisierten reaktiven Aluminiumoxids in den angegebenen Mengen ist in vorliegender Erfindung entscheidend. Durch das micronisierte reaktive Aluminiumoxid wird eine gleichmässig verteilte Binderphase und eine geeignete Rheologie der Aufschlämmung erzielt. Gleichzeitig können Zusätze von plastischen Materialien zur Aufschlämmung, die Reaktionen mit dem schmelzflüssigen Metall zeigen können, auf einem Minimum gehalten werden. Montmorillonit, enthalten in Mengen von 1 bis 5 Gew.-%, vorzugsweise 1 bis 3 Gew.-%, ist ein weiterer wichtiger Bestandteil des keramischen Materials. Montmorillonit ist ein hochplastiches Material mit der ungefähren Zusammensetzung $Al_2O_3 \cdot SiO_2 \cdot H_2O$. Man hat beispielsweise gefunden, dass Montmorillonit wesentlich plastischer ist als Bentonit. Die Anwendung eines relativ kleinen Prozentsatzes an hochplastischem Montmorillonit anstelle von Bentonit ergibt bei einer geeigneten thixotropen Rheologie der Aufschlämmung eine wesentlich verbesserte, der keramischen Zusammensetzung eigene Festigkeit in den fertigen Filtermaterialien. Der Montmorillonit wirkt in Synergie mit dem micronisierten reaktiven Aluminiumoxid, um gleichzeitig mit einer gleichmässig verteilten Binderphase eine verbesserte, der keramischen Zusammensetzung eigene Festigkeit zu erreichen.

Ein weiterer wesentlicher Bestandteil des keramischen Materials ist die Anwesenheit von keramischen Fasern in Mengen von 1 bis 10 Gew.-%, vorzugsweise von 1 bis 3 Gew.-%. Mehr als 10 Gew.% keramische Fasern bewirken ein Verklumpen derselben in der Aufschlämmung und eine gleichmässige Suspension kann nicht erreicht werden. Mehr als 3 Gew.-% keramische Fasern bringen nur noch einen schwachen verstärkenden Effekt in die Festigkeit. Die bevorzugten 1 bis 3 Gew.-% Fasern bringen bei gleich guter Dispergierung der Fasern ohne Klumpenbildung in der Aufschlämmung eine bedeutende Verbesserung der Festigkeit der fertigen Filterelemente. Die keramischen Fasern wirken verzögernd auf die Rissbildung und verbessern somit die der keramischen Zusammensetzung eigene Festigkeit. Die aus Kostengründen bevorzugt eingesetzten keramischen Fasern sind aus Aluminiumsilikat. Weiters können Fasern, beispielsweise aus Aluminiumoxid oder Zirkonoxid angewendet werden. Im weiteren enthält das keramische Material 15 bis 25 Gew.-% Aluminiumorthophosphat. Aluminiumorthophosphat ist ein an Luft abbindendes Mittel, das im wesentlichen indifferent gegenüber geschmolzenem Metall ist. Das an Luft abbindende Mittel oder das Bindemittel bindet oder härtet die keramische Aufschlämmung ohne Hitzeanwendung, vorzugsweise durch Trocknung, normalerweise durch eine chemische Reaktion bei der Erwärmung auf mässige Temperatur. Das Aluminiumorthophosphat wird zweckmässig in 50 %iger wässriger Lösung angewendet. Andere an Luft abbindende Mittel, die angewendet werden können, sind beispielsweise Magnesiumorthoborat, Aluminiumhydroxychlorid usw. Alkalimetallsilikate, wie beispielsweise Natriumsilikat, können wenigstens teilweise verwendet werden, doch sind diese Verbindungen weniger wünschenswert, da diese schon bei ca. 800 °C schmelzen und somit ihre Festigkeit verlieren. Im weiteren kann sich das enthaltene Silicium und das allfällig enthaltene Natrium in der Schmelze lösen. Aus gleichen Gründen liessen sich Aethylsilikat und weitere Phosphate verwenden, sind aber ebenfalls weniger wünschenswert. Aluminiumorthophosphat ist besonders geeignet, da es eine gute Kombination der Eigenschaften, wie Nichtreaktivität, Hitzebeständigkeit und Abbindefähigkeit beinhaltet. Wie weiter oben beschrieben, wird das an der Luft abbindende Mittel in Form einer wässrigen Suspension zugegeben, im Fall von Aluminiumorthophosphat vorzugsweise als eine Mischung gleicher Gewichtsteile von Bindemittel und Wasser. Das Bindemittel hat die Aufgabe, dem keramischen Formkörper nach dem Verbrennen oder Verflüchtigen des organischen Schaummaterials und vor der Ausbildung der keramischen Bindung die notwendige Festigkeit zu verleihen. Mit dem Bindemittel soll auch die für das Endprodukt nötige Festigkeit erreicht werden. Die Stabilität und Festigkeit der chemischen Bindung der bevorzugten Bindemittel ist bei vielen Anwendungszwecken der Endprodukte genügend, so dass eine Sinterung bei hohen Temperaturen überflüssig ist. Diese Festigkeit ist massgeblich und bleibt auch über einen weiten Temperaturbereich erhalten. Erfindungsgemäss wird 15 bis 25 Gew.-% Aluminiumorthophosphat angewendet. Wie schon dargelegt, handelt es sich bei der Aufschlämmung aus keramischen Material um eine wässrige Aufschlämmung in solcher Konzentration, dass die Viskosität kontrolliert werden kann und die es ermöglicht, die Aufschlämmung zu verarbeiten. In der Regel sind 10 bis 40 Gew.-% Wasser in der Aufschlämmung enthalten, wobei zumindest ein Teil des Wassers mit der wässrigen Suspension von Aluminiumorthophosphat eingebracht wird. Die Endprodukte sind gebundene keramische Schaumstrukturen mit einer Vielzahl miteinander verbundener Hohlräume, die mit einem Netzwerk aus Keramik umgeben sind. Die offenzelligen Schaumstrukturen können den Bedürfnissen der Filtrierprozesse für verschiedene geschmolzene Metalle angepasst werden. Das Herstellungverfahren erlaubt es, die erfindungsgemäss vorgeschlagenen Filtermaterialien leicht und einfach in verschiedensten Variationen herzustellen. Zum Beispiel eignet sich der erfindungsgemässe Keramikfilter und dessen Herstellungsverfahren zur Herstellung von Filtern mit den Eigenschaften, wie sie in der US-PS 3 962 081 beansprucht sind. Weitere Variationen bezüglich der Luftdurchlässigkeit, der Porosität, der Porengrösse und der Dicke lassen sich mit vorliegendem Verfahren ebenfalls verwirklichen. Von besonderem Vorteil ist, dass das erfindungsgemässe Filtermaterial eine hohe Temperaturfestigkeit aufweist und den Angriffen von schmelzflüssigem Metall widersteht. Im weiteren ist beim Starten des Filtrierprozesses kein grosser metallostatischer Kopf notwendig.

## Patentansprüche

1. Poröser Keramikfilter für die Filtration von schmelzflüssigen Metallen, aus einer Vielzahl von miteinander verbundenen Hohlräumen, die mit einem Netzwerk aus Keramik umgeben sind, bestehend aus 55 bis 70 Gew.-% $Al_2O_3$, 2 bis 10 Gew.-% micronisiertem reaktivem Aluminiumoxid, 1 bis 5 Gew.-% Montmorillonit, 1 bis 10 Gew.-% keramische Fasern und den Glühprodukten von 15 bis 25 Gew.-% Aluminiumorthophosphat.

2. Keramikfilter nach Anspruch 1, enthaltend 60 bis 65 Gew.-% $Al_2O_3$.

3. Keramikfilter nach Anspruch 1 und 2, enthaltend 2 bis 5 Gew.-% micronisiertes reaktives Aluminiumoxid.

4. Keramikfilter nach Anspruch 1 bis 3, enthaltend 1 bis 3 Gew.-% keramische Fasern.

5. Keramikfilter nach Anspruch 1 bis 4, enthaltend keramische Fasern aus Aluminiumsilikat.

6. Verfahren zur Herstellung von porösen Keramikfiltern nach Anspruch 1 durch Imprägnieren eines flexiblen organischen Schaummaterials mit einer wässrigen Aufschlämmung aus keramischem Material, trocknen des imprägnierten Schaummaterials, erwärmen, um das organische Schaummaterial zu entfernen, und anschliessendem Hitzebehandeln oder Sintern des resultierenden keramischen Körpers, dadurch gekennzeichnet, dass das keramische Materials 55 bis 70 Gew.-% $Al_2O_3$, 2 bis 10 Gew.-% micronisiertes reaktives Aluminiumoxid, 1 bis 5 Gew.-% Montmorillonit, 1 bis 10 Gew.-% keramische Fasern und 15 bis 25 Gew.-% Aluminiumorthophosphat enthält.

7. Verfahren gemäss Anspruch 6, dadurch gekennzeichnet, dass die wässrige Aufschlämmung 60 bis 90 Gew.-% keramisches Material enthält.

## Claims

1. Porous ceramic filter for the filtration of molten metals, of a plurality of interconnected cavities which are surrounded by a network of ceramic material, comprising 55 to 70 wt.% $Al_2O_3$, 2 to 10 wt.% micronised reactive aluminium oxide, 1 to 5 wt.% montmorillonite, 1 to 10 wt.% ceramic fibres and the products of calcination of 15 to 25 wt.% aluminium orthophosphate.

2. Ceramic filter according to claim 1, containing 60 to 65 wt.% $Al_2O_3$.

3. Ceramic filter according to claims 1 and 2, containing 2 to 5 wt.% micronised reactive aluminium oxide.

4. Ceramic filter according to claims 1 to 3, containing 1 to 3 wt.% ceramic fibres.

5. Ceramic filter according to claims 1 to 4, containing ceramic fibres of aluminium silicate.

6. Process for the production of porous ceramic filters according to claim 1 by impregnation of a flexible organic foam material with an aqueous suspension of ceramic material, drying of the impregnated foam material, heating in order to remove the organic foam material, and subsequent heat-treatment or sintering of the resultant ceramic body, characterised in that the ceramic material contains 55 to 70 wt.% $Al_2O_3$, 2 to 10 wt.% micronised reactive aluminium oxide, 1 to 5 wt.% montmorillonite, 1 to 10 wt.% ceramic fibres and 15 to 25 wt.% aluminium orthophosphate.

7. Process according to claim 6, characterised in that the aqueous suspension contains 60 to 90 wt.% ceramic material.

**Revendications**

1. Filtre céramique poreux pour la filtration de métaux fondus, consistant en un grand nombre d'espaces creux reliés entre eux et environnés d'un réseau de matière céramique, consistant en 55 à 70 % en poids d'$Al_2O_3$, 2 à 10 % en poids d'alumine réactive micronisée, 1 à 5 % en poids de montmorillonite, 1 à 10 % en poids de fibres céramiques, et les produits de calcination de 15 à 25 % en poids d'orthophosphate d'aluminium.

2. Filtre céramique selon la revendication 1, contenant 60 à 65 % en poids d'$Al_2O_3$.

3. Filtre céramique selon les revendications 1 et 2, contenant 2 à 5 % en poids d'alumine réactive micronisée.

4. Filtre céramique selon les revendications 1 à 3, contenant 1 à 3 % en poids de fibres céramiques.

5. Filtre céramique selon les revendications 1 à 4, contenant des fibres céramiques de silicate d'aluminium.

6. Procédé de préparation des filtres céramiques poreux selon la revendication 1, par imprégnation d'une matière-mousse organique flexible à l'aide d'une dispersion aqueuse de matière céramique, séchage de la matière-mousse imprégnée, chauffage pour élimination de la matière-mousse organique puis traitement à la chaleur ou frittage du corps céramique formé, caractérisé en ce que la matière céramique contient 55 à 70 % en poids d'$Al_2O_3$, 2 à 10 % en poids d'alumine réactive micronisée, 1 à 5 % en poids de montmorillonite, 1 à 10 % en poids de fibres céramiques et 15 à 25 % en poids d'orthophosphate d'aluminium.

7. Procédé selon la revendication 6, caractérisé en ce que la dispersion aqueuse contient 60 à 90 % en poids de matière céramique.